(19)

Europäisches Patentamt
European Patent Office
Office européen des brevets

(11)  **EP 1 437 440 B1**

(12)  **EUROPEAN PATENT SPECIFICATION**

(45) Date of publication and mention
of the grant of the patent:
**07.11.2012  Bulletin 2012/45**

(51) Int Cl.:
*D06N 3/00* (2006.01)       *B32B 7/06* (2006.01)
*B32B 27/12* (2006.01)      *B32B 37/14* (2006.01)

(21) Application number: **02765546.3**

(86) International application number:
**PCT/JP2002/009456**

(22) Date of filing: **13.09.2002**

(87) International publication number:
**WO 2003/027380 (03.04.2003 Gazette 2003/14)**

(54) **ARTIFICIAL LEATHER EXCELLENT IN EXPANDABILITY AND METHOD FOR PRODUCTION THEREOF**

KUNSTLEDER MIT AUSGEPRÄGTER EXPANDIERFÄHIGKEIT UND VERFAHREN ZU DESSEN HERSTELLUNG

CUIR ARTIFICIEL PRESENTANT D'EXCELLENTES PROPRIETES D'EXTENSIBILITE ET PROCEDE DE PRODUCTION ASSOCIE

(84) Designated Contracting States:
**AT BE BG CH CY CZ DE DK EE ES FI FR GB GR IE IT LI LU MC NL PT SE SK TR**

(30) Priority: **20.09.2001  JP 2001287129**
**20.09.2001  JP 2001287130**

(43) Date of publication of application:
**14.07.2004  Bulletin 2004/29**

(73) Proprietor: **TORAY INDUSTRIES, INC.**
**Tokyo 103-8666 (JP)**

(72) Inventors:
• **HANAOKA, Jun**
**Otsu-shi, Shiga 520-0842 (JP)**
• **IIJIMA, Hiromichi**
**Otsu-Shi, Shiga 520-0833 (JP)**
• **IKEYAMA, Masami**
**Yokaichi-shi, Shiga 527-0086 (JP)**
• **WATANABE, Koji**
**Kusatsu-shi, Shiga 525-0057 (JP)**

(74) Representative: **Webster, Jeremy Mark et al**
**Mewburn Ellis LLP**
**33 Gutter Lane**
**London**
**EC2V 8AS (GB)**

(56) References cited:
**JP-A- 7 145 569        JP-A- 52 047 901**
**JP-A- 2000 336 581    JP-A- 2001 214 377**
**US-A- 4 515 854**

• **DATABASE WPI Week 200109, Derwent Publications Ltd., London, GB; AN 2001-074776, XP002539829 & JP 2000 303365 A (TORAY IND INC) 31 October 2000**
• **DATABASE WPI Week 198631, Derwent Publications Ltd., London, GB; AN 1986-200819, XP002539830 & JP 61 132684 A (ASAHI CHEM IND CO LTD) 20 June 1986**
• **DATABASE WPI Week 200150, Derwent Publications Ltd., London, GB; AN 2001-461667, XP002539831 & JP 2001 164477 A (KYOWA LEATHER CLOTH CO LTD) 19 June 2001**
• **DATABASE WPI Week 198805, Derwent Publications Ltd., London, GB; AN 1988-031463, XP002539832 & JP 62 289602 A (KURARAY CO LTD) 16 December 1987**
• **DATABASE WPI Week 198805, Derwent Publications Ltd., London, GB; AN 1988-031464, XP002539833 & JP 62 289603 A (KURARAY CO LTD) 16 December 1987**
• **DATABASE WPI Week 200067, Derwent Publications Ltd., London, GB; AN 2000-686943, XP002539834 & WO 00 60159 A1 (KURARAY CO LTD) 12 October 2000**

**Description**

TECHNICAL FIELD

The present invention relates to a method of manufacturing artificial leather excellent in elasticity.

BACKGROUND ARTS

Conventional artificial leather composed of non-woven fabrics has been short of elasticity and, particularly, almost not in its longitudinal direction. Therefore, there have been problems in the conventional artificial leather such as low elasticity not resulting in a tight kind of clothes, but restricting to a somewhat big sort of clothes, that is, close to a plain clothes without a waist line when the artificial leather is used for clothing, and poor formability when used as a material for manufacturing a car seat, for instance.

The cause of shortage of the longitudinal elasticity in the conventional artificial leather composed of non-woven fabrics is for example, that tension has been applied ceaselessly to its longitudinal direction during manufacturing processes to elongate its length. In the lateral direction of the leather product, the manufacturing processes are performed in its relatively loose state, so that the elasticity can be imposed more easily in the lateral direction of artificial leather than its longitudinal direction. For instance, Japanese Patent Unexamined Publication No. Hei 6-39747 discloses artificial leather having lateral elasticity as the artificial leather in which elastomer is filled in the accumulative entangled structure having elastic fabrics inserted inside the ultrafine fiber entangled structure, thereby successfully demonstrating the lateral elasticity of the leather. However, it was difficult to manufacture artificial leather that could demonstrate the longitudinal and lateral elasticity simultaneously.

As a method of imposing the longitudinal elasticity, a method of overfeeding and thermal treatment before a dyeing process has been disclosed in Japanese Patent Unexamined Publication No. 2000-303365. However, since a shrinkage treatment is performed to the entangled structure of non-woven fabrics at greige processing step, it was difficult not only to make a longitudinal shrinkage by the thermal treatment, but also to obtain enough high elasticity to exceed the elongation of 15%, and hence it was not general.

Further, there is a limitation to imposing the longitudinal elasticity to the ultrafine fiber in spite of a high ratio of the elastomer, and it has been difficult to obtain artificial leather having a favourable surface appearance due to the low density of ultrafine fiber. Further examples of artificial leather are provided in JP-A-61-132684, JP-A-2001-164477, JP-A-62-289602 and JP-A-62-289603, and US-A-4515854.

Therefore, it is an object of the present invention to provide a method of manufacturing artificial leather excellent in elasticity, particularly the longitudinal elasticity that has not been achieved by the prior art, without deterioration of surface appearance of the artificial leather. Accordingly, in a first aspect the invention provides a method of manufacturing artificial leather excellent in elasticity, comprising the steps of: integrating a fiber web and a shrinkable sheet before or after applying elastomer to the fiber web; subjecting the resulting sheet to a shrinking treatment such that the shrinkage in longitudinal direction is 10% or more, and then removing the shrinkable sheet.

In a second aspect the invention provides an artificial leather for which longitudinal elongation, as defined herein, is 15% or more lateral elongation is 15% or more and longitudinal elastic recovery ratio, as defined herein, is 80% or more, wherein the artificial leather is composed of a fiber entangled web composed mainly of ultrafine fiber and elastomer applied to the fiber entangled web, wherein the polymer for forming the fiber is selected from nylon 6, nylon 66, nylon 12, co-polymerised nylon, polyethylene terephthalate, polybutylene terephthalate, polypropylene terephthalate and copolymers thereof, the fiber having a buckling structure formed after application of elastomer to the fiber entangled web and following a shrinking treatment in the longitudinal and lateral directions such that the shrinkage in the longitudinal direction is 10% or more.

PREFERRED EMBODIMENTS OF THE INVENTION

The artificial leather excellent in elasticity of the present invention indicates the one having the longitudinal elongation of 15% or more, preferably 20% or more, and the longitudinal elastic recovery ratio of 80% or more, preferably 85% or more. If the elongation of artificial leather is less than 15%, it is not preferable because a shirt made of the artificial leather is not favorably worn due to 'feeling of prop'. If the elastic recovery ratio of artificial leather is less than 80%, it is not preferable because a shirt made of the artificial leather may easily generate 'bagginess' at a part to be stretched, like an elbow. In addition to the longitudinal elasticity, the lateral elongation is 15% or more. Preferably it is 20% or more, and the lateral elastic recovery ratio of 80% or more, preferably 85% or more are preferable for improving wearing comfort of leather goods.

In the artificial leather having excellent elasticity of the present invention, it is possible to improve elongation by forming a polymer layer on the backside thereof The polymer layer of the present invention means the one that polymers are present in the form of a film or a lattice on at least one surface of the artificial leather.

For the elastomer used in the present invention, anything will be fine if it can be used as an adhesive like polyvinyl acetate resin, acryl resin, natural rubber, polyurethane resin, epoxy resin and the like. Among them, polyurethane is particularly preferable in that it has remarkable elasticity and practical usage.

Hereinafter, a description will be made on the method of manufacturing artificial leather having excellent elasticity of the present invention.

According to a method of manufacturing artificial leather having excellent elasticity in embodiments of the present invention, there are the steps of: overlapping ultrafine fiber or fiber web capable of forming ultrafine fiber with shrinkable sheet to subject them to an entanglement process such as needle punching, water-jet punching, or adhesion process to thereby integrate them; then, thermally treating the sheet obtained by the treatment including an ultrafine fiber forming treatment, an elastomer applying treatment and a napping treatment; shrinking the sheet in its longitudinal and/or lateral direction by the shrinking force of a shrinkable sheet; and removing the shrinkable sheet.

In the present invention, the aforementioned treatment including an ultrafine fiber forming treatment, an elastomer applying treatment and a napping treatment can be performed in the sequence of an ultrafine fiber forming treatment, an elastomer applying treatment and a napping treatment, or in the sequence of an elastomer applying treatment, an ultrafine fiber forming treatment and a napping treatment.

Polymers for forming fiber may include polyamides such as nylon 6, nylon 66, nylon 12, co-polymerized nylon, polyesters such as polyethylene terephthalate, polybutylene terephthalate, polypropylene terephthalate and/or their copolymer, but not limited thereto.

The fineness of fiber is preferably not less than 0.0001dtex but not more than 0.9dtex. If the fineness of fiber exceeds 0.9dtex, it is not preferable because soft touch of the surface peculiar to artificial leather cannot be obtained. On the other hand, if the fineness of fiber is less than 0.0001dtex, it is not preferable because the fiber strength gets low.

The combination of a fiber capable of forming an ultrafine fiber and polymers that may be peeled off or separated by dissolution, or physical or chemical reaction may includes: suitable combination of polyesters such as polyethylene terephthalate, polybutylene terephthalate, polypropylene terephthalate and/or their copolymers, polyamides such as nylon 6, nylon 66, nylon 12, co-polymerized nylon, polyolefines such as polyethylene or polystyrene. Those polymers can be properly combined for uses.

A knitted or woven fabric or shrinkable film can be used for a shrinkable sheet mentioned in the method of manufacturing artificial leather having excellent elasticity of the present invention. As a knitted or woven fabric, any texture such as plain weave, gauze weave or the like may be used. Here, the high shrinkage property means that the sheet demonstrates the shrinkage of 10% or more, preferably, more 15% or more with a single treatment under treatment conditions (temperature, atmosphere) of the integrated sheet.

As yarns composing the knitted or woven fabric, synthetic fiber yarns such as polyester, polyamide and the like are used. If highly shrinkable yarns are in use, the shrinkage may be increased when the thermal treatment is performed to shrink the sheet in the longitudinal and/or lateral direction and elasticity of the resultant artificial leather can be improved. In the present invention, the highly shrinkable yarn means the-yarn having boiling shrinkage or dry heat shrinkage of 5% or more, preferably 10% or more.

For instance, polyesters copolymerized with isophthalic acid can be used for the highly shrinkable yam, but not limited thereto. If a needle punch is used as an entanglement means, the twist number of yarn is 700T/m or more, preferably not less than 1000T/m but not more than 4000T/m, and more preferably, not less than 2000T/m but not more than 3000T/m. If the twist number is less than 700T/m, it is not preferable because a greater damage may be made to yarns by the stimulus during the needle punching. On the other hand, if the twist number exceeds 4000T/m, it is not preferable in terms of processing limit of the twisted yarn and economic efficiency. Furthermore, if the highly twisted yarn is used, it is possible to shrink the sheet in the longitudinal and/or lateral direction by the untwisting torque applied during the thermal treatment.

In order to obtain the fiber entangled structure sheet to be used for the present invention, for instance, the monofilament of composite fiber capable of forming ultrafine fiber is turned into a web and then made into a sheet by an entanglement means such as needle punch, water-jet punch or the like, but not limited thereto.

The ultrafine fiber forming treatment in the present invention includes a removal of sea component in an island-in-sea type fiber, alkaline treatment to a separable type fiber or a mechanical stimulation such as scratching or beating, thereby generating an ultrafine fiber.

In the present invention, an elastomer is applied to the fiber entangled structure embedded with ultrafine fiber, ultrafine fiber bundle or composite fiber capable of forming ultrafine fiber. The elastomer can be applied either before or after the composite fiber capable of forming ultrafine fiber is processed into ultrafine fiber. The elastomer includes, for instance, polyurethane elastomer, polyurea elatomer, polyurethane polyurea elastomer, polyacrylate resin, acrylonitrile butadiene elastomer, styrene butadiene elastomer and the like. Of them, polyurethane-based elastomer such as polyurethane elastomer, polyurea elastomer and polyurethane polyurea elastomer are preferred. As these polyurethane-based elastomer, it is preferred that at least one kind selected from a group consisting of polymer diol having average molecular weight of 500~3500 such as polyester diol, polyether diol, polyester polyether diol, polylactone diol or polycarbonate diol is used. More preferably, polyurethane which employs polymer diol containing 30 wt% or more of polycarbonate diol is preferred in consideration of durability of a product. If polycarbonate diol is less than 30 wt%, it is not preferable because the durability is decreased.

The polycarbonate diol in the present invention refers to diol structure being connected by carbonate bond to form polymer chain, having hydroxyl group at both ends thereof The diol-structure is determined by glycol used as a raw material, for instance, 1,6-hexane diol, 1,5-pentane diol, neopentyl glycol or 3-methyl-1,5-pentane diol, but its kind is not limited thereto. If copolymerized polycarbonate diol with at least more than two kinds of glycols selected from the group of the aforementioned glycol is used as a raw material, it is particularly preferable for obtaining artificial leather that has excellent softness and appearance. In addition, in order to obtain artificial leather excellent particularly in softness, it is preferable to introduce bonds other than carbonate bond among polymer diols within the range of not damaging durability, for instance, ester bond, ether bond and the like.

In order to introduce such chemical bond, polycarbonate diol and other polymer diol are separately polymerized and then mixed together, which are finally combined at an adequate ratio at the time of polymerizing polyurethane.

It is preferable that the amount of the added elastomer is within the range of 10~70 wt% as solid content based on the relative fiber weight ratio, in consideration of softness, surface touch and dying uniformity of a product. If the amount to be added is less than 10 wt%, the anti-abrasion is readily deteriorated. If the amount to be added is more than 70%, the feeling of the product becomes stiff because it is hard to obtain a sufficient shrinkage effect, that is, an effect to impose a stretching effect because shrinkage of the sheet is restricted in the thermal treatment.

Additives such as coloring agent, antioxidation agent, antistatic agent, dispersing agent, softening agent and coagulation adjusting agent may be included in the elastomer, if needed.

Next, a napped surface of fiber is formed by napping treatment to at least one side of the sheet. There are various kinds of methods for forming the napped surface of fiber, such as buffing by a sand paper or the like. Besides, elastomer such as polyurethane may be coated onto the napped surface of fiber to be grain artificial leather.

The sheet is shrunk by the shrinkage force of a knitted or woven fabric by the thermal treatment. The thermal treatment may be performed by using a jet dyeing machine such as hot air heater, steam heater, *Circular, UniAce,* tumble dryer or relaxer and the like. If the thermal treatment is applied in the jet dyeing machine while rubbing, the shrinkage of the sheet can be promoted. The temperature of the thermal treatment is determined such that the sheet gets flexible to generate shrinking force of a knitted or woven fabric, or that the twisted knitted or woven fabric generates the untwisting torque. It is appreciated that such temperature is reasonably selected within the range of not less than 100°C and not more than 135°C. When the sheet is thermally treated, the length and/or width of the sheet are reduced because of the effect of the knitted or woven fabric entangled and integrated with non-woven fabric. A dyeing process may be performed with the thermal treatment at the same time, or after the thermal treatment.

Then, the knitted or woven fabric is removed from the artificial feather, thereby resulting in generating elasticity in the longitudinal and/or lateral direction. There are methods for removing the knitted or woven fabric such as buffing the back of the knitted or woven fabric using card clothing or sand paper, peeling it off mechanically or slicing half thereof in thickness direction (slicing the thickness by half) with a slicing machine.

Next, when the fiber entangled structure and the shrinkable sheet are integrated by adhesion in the present invention, it is also possible to impose elasticity on the artificial leather by integrating after applying the elastomer, performing shrinkage treatment, and removing the shrinkable sheet. As a result, the artificial leather may have elasticity.

There are sheets to be used as a shrinkable sheet, such as sheet which is shrunk in area by heating such as a knitted or woven fabric composed of shrinkable film or polyester-based highly shrinkable yam, or sheet which can be shrunk in area by using emulsion of benzyl alcohol or phenylethyl alcohol such as a knitted or woven fabric composed of polyamide yarn.

The shrinkage of the shrinkable sheet is 10% or more, preferably 15% or more in the longitudinal direction. If the shrinkage is less than 10%, it is difficult to impose elasticity of 15% or more on the artificial leather so that it is not preferable. If the shrinkable sheet having elasticity 10% or more in both the longitudinal and lateral directions is used, it is also possible to impose elasticity both the longitudinal and lateral directions of the sheet.

Polyvinyl chloride, polyethylene, polystyrene, polyethylene terephthalate or the like can be selected as a material for the shrinkable film. Besides, if the thickness of the shrinkable film gets larger, the shrinking force of the shrinkable film is increased and the shrinkage can be increased after artificial leather is attached and the thermal treatment is performed.

As a polymer for forming a polyester-based highly shrinkable yarn, undrawn yarn of polyesters such as polyethylene terephthalate, polybutylene terephthalate, polypropylene terephthalate or their copolymer, the one having a greater shrinkage by lowering draw ratio or the other having a higher shrinkage by adding copolymerizing component such as isophthalic acid can be used.

As a polymer for forming polyamide fiber, polyamides such as nylon 6, nylon 66, nylon 12, copolymerized nylon or the like can be used.

As a knitted or woven fabric composed of a polyester-based highly shrinkable yarn or composed of a polyamide yam, any texture such as plain weave or gauze weave or the like my be used, but it is preferred to use a woven fabric made so as not to deteriorate the shrinkage by minimizing the thermal treatment.

The above-mentioned artificial leather and the shrinkable sheet are attached by adhesive.

As an adhesive to be used in the present invention, polyvinyl acetate resin, acryl resin, natural rubber, polyurethane resin or epoxy resin may be selected for use, but an adhesive capable of attaching without heating such as an UV curable adhesive or wet coagulating adhesive is preferable. Of them, the wet coagulating polyurethane-based adhesive is particularly preferred because of excellent elasticity and practical usage. If an adhesive to be adhered by heating is used, only the shrinkable sheet is shrunk and easily peeled off from the artificial leather before the artificial leather and the shrinkable sheet are completely attached when they are heated at a temperature over the level of temperature that the shrinkable sheet starts shrinking. Therefore, it is better to select an adhesive that can be attached at a low level of temperature or to employ a method of attaching at a low level of temperature for a longer period of time.

The adhesive to be used in the present invention may be completely eliminated by using a method such as a water-rinsing, buffing process or the like. However, if the polymer layer finally remains on at least one surface of the artificial leather, it may control the elasticity of artificial leather. Therefore, the shape of a polymer layer is also important. The polymer layer may be formed in the shape of film, dot, lattice or the like, but its shape may be controlled depending on a coating method of adhesive. If a surface adhesion is carried out by coating the adhesive over the whole area of the sheet as a film shape, an adhesive layer can be formed in a film shape. At this time, the elasticity recovery ratio can be improved if an adhesive of elastomer is applied to form a layer of elastomer film. If the surface of the elastomer film is used as that of a product, it may be used for a variety of uses as grain artificial leather having excellent elasticity. A polyurethane resin-based adhesive is preferred as an adhesive made of elastomer because it is excellent in elasticity and practical usage. In addition, the kind of polymer used as an adhesive or the thickness of a film may be properly selected depending on the elasticity required.

If a dot adhesion method is used for coating an adhesive in the shape of a plurality of dots to form a dot-shaped adhesive layer, or if a lattice adhesion method is used for coating an adhesive in the shape of a lattice or the like to form a lattice-shaped adhesive layer, it is also possible to intentionally form convex and concave portions on the surface of the artificial leather after shrinkage.

Then, the sheet having the artificial leather integrated with the shrinkable sheet is shrunk. The sheet may be shrunk by hot air, hot water, steam or the like if the sample to be treated is shrunk by heating. At this time, the shrinkage should be 10% or more in the longitudinal direction to impose the elasticity rate of 15% or more on the artificial leather.

The shrinkage can be adjusted with the heating temperature in the shrinkage treatment, the shrinkage and shrinking force of the shrinkable sheet and the like. For instance, in case of a shrinkable film, polymer kind or film thickness can be used for controlling the shrinking force.

Moreover, when the sample to be treated is shrunk in benzyl alcohol or phenylethyl alcohol emulsion, the shrinking process is preferably performed by combination of the steps of treating the sample in benzyl alcohol or phenylethyl alcohol emulsion and heating it, for example method of sequentially dipping the sample to be treated in the emulsion at room temperature and then in hot water, method of dipping the sample to be treated in heated emulsion, or method of dipping the sample to be treat in the emulsion and gradually heating by raising the temperature.

The artificial leather is shrunk by the shrinking force of a shrinkable sheet in the course of the aforementioned shrinkage treatment, so that the ultrafine fiber consisting of artificial leather forms a buckling structure. Accordingly, subsequently the shrinkable sheet is removed to thereby obtain artificial leather having excellent elasticity.

As methods of removing the shrinkable sheet after the shrinkage treatment is performed to the sheet having shrinkable sheet integrated with the artificial leather, method such as mechanical peeling-off, buffing with sand paper or slicing-out can be used.

If a polymer layer is formed on the surface of artificial leather by leaving part of an adhesive on the artificial leather even after removal of the shrinkable sheet, it is possible to adjust the elasticity of artificial leather. Also, if the polymer layer is a film-shaped or a lattice-shaped layer of elastomer, it is possible to improve the elasticity recovery ratio. If there is a problem with touch, appearance or the like in artificial leather, it may be possible to remove the polymer layer by buffing with sand paper or slicing-out as long as the removal step does not make any damage to the elasticity. As the method of controlling the elasticity upon removing the adhesive by the method of buffing, slicing or water-rinsing after shrinkage treatment is performed using a hydrophilic adhesive or the like, a method of heat setting a fiber may be applied, if needed, before the shrinkable sheet is removed.

EXAMPLES

Next, The present invention will be explained in further detail with examples and comparative examples.

The elongation and elastic recovery ratio of the example are measured by the following method.

(1) Elongation:

Three samples of 5cmx30cm are obtained in the longitudinal and lateral directions, respectively. A tensile tester pulling at a constant speed is used to determine elongation by pulling up to 1.8kg with a grasping interval of 20cm, tensioning speed of 20 cm/min. The grasping interval at that time is measured and the elongation (%) is obtained according to the following formula, and then the average value for three samples is estimated:

$$\text{Elongation} = (L1 - L)/L \times 100 \ (\%)$$

L: grasping interval
L1: grasping interval when pulled up to 1.8kg.

(2) Elastic recovery ratio:

Three samples of 5cmx30cm are obtained in the longitudinal and lateral directions, respectively. A tensile tester pulling at a constant speed is also used with a grasping interval of 20cm. The samples are pulled up to the elongation of 80% separately obtained by the aforementioned method and are left in this state for one minute. The samples are returned to its original position with same speed and are left in this state for three minutes. The aforementioned steps are repeated for five times for each sample. The elongation pulled up to the same load as the weight of sample is repeated for five times and it is regarded as the remaining elongation. The elastic recovery ratio (%) is obtained by the following formula, and the average value for the three samples is finally estimated.

$$(\text{Elastic recovery ratio}) = (L2 - L3)/L2 \times 100 \ (\%)$$

L2: Length on the chart corresponding to the elongation of 80%
L3: Length on the chart corresponding to the remaining elongation after each sample is repeatedly pulled five times.

Example 1

Raw cotton of polymer reciprocal arrangement structure fiber consisting of polyethylene terephthalate as island component and polystyrene as sea component, with the composite fineness of 4.0dtex and island fineness of 0.20dtex, fiber length of 51 mm is used to make a fiber-accumulated web by carding and lapping processes. Both sides of the web are overlapped with fabrics having plain weave which is weaved to density of fabric of 40x300 punches/cm using highly twisted yarn manufactured by Toray Industries Co., Ltd. (84T-72f-265, twist number of 2500T/m), and the needle punching of 2500 punches/cm$^2$ is performed to prepare non-woven fabric sheet in which fabrics are entangled and integrated.

The sheet is dipped and shrunk in the boiling water, and polyvinyl alcohol is applied to the sheet. Then, the sea component is dissolved in *Trichlene* to result in ultrafine fiber. The polyurethane manufactured by a conventional method, which uses a 75:25 mixture of polytetramethylene glycol and polycaprolactone glycol as polymer diol, 4,4'-diphenylmethane diisocyanate as diisocyanate and methylene bisaniline as a chain extender, is applied by about 30wt% based on the weight of the sheet. The polyurethane is sliced at the center, and the sliced side is subjected to napping treatment by a buffing machine.

Then, *Circular* dyeing machine is used to dye a brown-series color with disperse dye. The dyeing temperature is 120°C, and the sheet is thermally treated in the dyeing step. As a result, the length of the sheet is reduced by about 15%. Next, the fabric surface of the sheet is buffed by a buffing machine to remove the fabric, to thereby obtain artificial leather.

The evaluation results of the artificial leather obtained as such are illustrated in Table 1 and 2.

Example 2

Artificial leather is obtained by the same methods described above in example 1, except for removal of fabrics by slicing machine.

Example 3

Artificial leather is obtained by the same method described above in example 1, except that raw cotton of polymer reciprocal structure fiber consisting of polyethylene terephthalate as sea component and polystyrene as sea component with the composite fineness of 3.0dtex, island fineness of 0.04dtex, fiber length of 51mm is used. The evaluation results of the artificial leather obtained as such are illustrated in Tables 1 and 2.

Example 4

Artificial leather is obtained in the same methods described above in example 3, except for using a highly shrinkable yarn 84T-12-143 (twist number of 2500T/m) manufactured by Toray Industries Co., Ltd. as weft yarn of a knitted or woven fabric. The thermal treatment is performed in the course of the dyeing step, so that both the length and width of the sheet are reduced by about 15%. The evaluation results of the artificial leather obtained as such are illustrated in Tables 1 and 2.

Comparative example 1

Artificial leather is obtained by the same methods described above in the example I, except that the remaining fabrics are not removed after the dyeing step.
The evaluation results of the artificial leather obtained as such are illustrated in Tables 1 and 2.

Comparative example 2

The raw cotton like in example 1 is used and it is made into a fiber-accumulated web by carding and lapping processes. Instead of accumulating fabrics, the needle punching of 2500punches/cm$^2$ is performed to prepare non-woven fabric sheet in which the fabrics are not contained The resultant sheet is shrunk and dyed in the same methods described in example 1, so as to obtain artificial leather.
The evaluation results of the artificial leather obtained as such are illustrated in Tables 1 and 2.

Comparative example 3

Artificial leather is obtained by the same methods described in comparative example 2, except for using raw cotton like in example 3.

Example 5

Artificial leather consists of polyethylene terephthalate for ultrafine fiber component and polycarbonate-based polyurethane for elastomer excellent in durability which is manufactured by a conventional method using 70:30 a mixture of polyhexamethylene carbonate glycol and polyneopentyl adipate as polymer diol, 4,4'-diphenylmethane diisocyanate as diisocyanate, and ethylene glycol as a chain extender. One surface of the artificial leather having the elongation ratios of 79% in the longitudinal direction and 118% in the lateral direction, the elongations of 6.8% in the longitudinal direction and 17.4% in the lateral direction, the elastic recovery ratios of 74.8% in the longitudinal direction and 78.1% in the lateral direction is coated with an adhesive consisting of wet hardening polyurethane. Then, a polyethylene terephthalate shrinkable film (thickness of 40$\mu$m) having boiling shrinkages of 45.8% in the longitudinal and 47.6% in the lateral directions is stacked thereon as a shrinkable sheet. Subsequently, the sheet is dipped into water to harden the adhesive to thereby performing adhesion. Next, the sheet is dipped and shrunk in the boiling water. The sheet is dried, and the shrinkable film is peeled off and removed. Thus, the layer of adhesive is left in the artificial leather. Therefore, it was possible to obtain artificial leather having favorable elasticity in which if the adhesive film surface side is taken as the external surface of the product, it is grain artificial leather, and if the napped surface side is taken as the external surface of the product, it is suede-like artificial leather. The evaluation results on the resultant artificial leather are illustrated in Tables 1 and 2.

Example 6

Artificial leather is obtained by the same method described in example 5, except for using a plain woven fabric of polyethylene terephthalate having boiling shrinkages of 17.3% in the longitudinal direction and 17.2% in the lateral direction, unit weight of 26.4g/m$^2$ and thickness of 0.1 mm, as a shrinkable sheet. The evaluation results of the artificial leather obtained as such are illustrated in Tables 1 and 2.

Example 7

Artificial leather is obtained by the same-methods described in example 5, except for using a plain woven fabric of nylon fiber as a shrinkable sheet, and the shrinkage method in which the sheet is dipped in benzyl alcohol emulsion and then in the boiling water. When the plain woven fabric of nylon fiber is treated in benzyl alcohol, its resultant shrinkages are 21.2% in the longitudinal and 13.0% in the lateral directions. The evaluation results of the artificial leather obtained as such are illustrated in Tables 1 and 2.

Example 8

Artificial leather is obtained by the same method described in example 5, except for using nylon 6 as the ultrafine fiber. The evaluation results of the artificial leather obtained as such are illustrated in Tables 1 and 2.

Example 9

Artificial leather is obtained by the same methods described in example 5, except for using a hydrophilic acryl-based adhesive as an adhesive, performing shrinkage and thermal treatments at dry heat of 180°C, peeling off and removing the shrinkable sheet and then rinsing off the adhesive with water. The evaluation results of the artificial leather obtained as such are illustrated in Tables 1 and 2.

Comparative example 4

Artificial leather is obtained by the same method described in example 5, except for using a plain woven fabric of polyethylene terephthalate having the boiling shrinkages of 6.0% in the longitudinal direction and 3.7% in the lateral direction, unit weight of $70g/m^2$ and thickness of 0.2mm. The evaluation results of the artificial leather obtained as such are illustrated in Tables 1 and 2.

Table 1

| | fiber entangled structure | | | shrinkable sheet | | | shrinking treatment of integrate sheet | | removal method | ultrafine fiber forming | integration method |
|---|---|---|---|---|---|---|---|---|---|---|---|
| | fineness | kind | unit weight g/m$^2$ | kind | boiling water shrinkage % length/ width | unit weight g/m$^2$ | condition | shrinkage % length/ width | | | |
| Example I | 0.2 | PET | 247 | highly twisted yarn fabric | 6.0/3.7 | 70 | 120°C liquid flow | 14.8/0 | buff | removal of sea component | entangled |
| Example 2 | 0.2 | PET | 216 | highly twisted yarn fabric | 6.0/3.7 | 70 | 120°C liquid flow | 14.8/0 | slice | remove of sea component | entangled |
| Example 3 | 0.04 | PET | 216 | highly twisted yarn fabric | 6.0/3.7 | 70 | 120°C liquid flow | 14.6/0 | buff | removal of sea component | entangle |
| Example 4 | 0.04 | PET | 358 | highly shrinkable fabric | 6.6/16.5 | 69 | 120°C liquid flow | 14.5/12.0 | buff | removal of sea component | entangled |
| Comparative Example 1 | 0.2 | PET | 255 | highly twisted yarn fabric | 6.0/3.7 | 70 | 120°C liquid flow | 14.8/0 | no removal | removal of sea component | entangled |
| Comparative Example 2 | 0.2 | PET | 322 | - | - | - | - | - | - | removal of sea component | - |
| Comparative Example 3 | 0.04 | PET | 178 | - | - | - | - | - | - | removal of sea component | - |
| Example 5 | 0.04 | PET | 172 | shrinkable film | 43.8/47.6 | 48.4 | boiling water | 22.2/23.8 | peeling | removal of sea component | entangled |

| | fiber entangled structure | | | shrinkable sheet | | | shrinking treatment of integrate sheet | | removal method | ultrafine fiber forming | integration method |
|---|---|---|---|---|---|---|---|---|---|---|---|
| | fineness | kind | unit weight g/m$^2$ | kind | boiling water shrinkage % length/ width | unit weight g/m$^2$ | condition | shrinkage % length/ width | | | |
| Example 6 | 0.04 | PET | 165 | highly shrinkable PET fabric | 17.3/17.2 | 26.4 | boiling water | 13.2/14.7 | peeling | removal of sea component | entangled |
| Example 7 | 0.04 | PET | 170 | N6 fabric | -/- | 40 | chemical treatment | 15/6 | peeling | removal of sea component | entangled |
| Example 8 | 0.04 | N6 | 140 | shrinkable film | 43.8/47.6 | 48.4 | boiling water | 24.3/26.6 | peeling | removal of sea component | entangled |
| Example 9 | 0.04 | PET | 172 | shrinkable film | 42.1/45.3 | 45.2 | 180°C dry heat | 23.1/22.8 | peeling | removal of sea component | entangled |
| Comparative Example 4 | 0.2 | PET | 170 | highly twisted yarn fabric | 6/4 | 70 | boiling water | 1.3/0.2 | peeling | removal of sea component | entangled |

Table 2

| | Elongation | | Elastic recovery ratio | |
|---|---|---|---|---|
| | Longitudinal direction | Lateral direction | Longitudinal direction | Lateral direction |
| Example 1 | 20.8 | 11.8 | 84.1 | 83.0 |
| Example 2 | 21.6 | 11.9 | 83.8 | 82.9 |
| Example 3 | 17.8 | 8.8 | 80.2 | 78.5 |
| Example 4 | 21.0 | 31.0 | 83.9 | 81.5 |
| Comparative example 1 | 5.5 | 8.8 | 79.2 | 83.0 |
| Comparative example 2 | 6.8 | 17.4 | 74.8 | 78.1 |
| Comparative example 3 | 4.5 | 13.9 | 73.7 | 79.7 |
| Example 5 | 27.2 | 54.0 | 87.2 | 85.4 |
| Example 6 | 16.4 | 26.9 | 89.8 | 88.4 |
| Example 7 | 16.3 | 20.6 | 84.4 | 85.3 |
| Example 8 | 29.0 | 57.9 | 85.7 | 82.8 |
| Example 9 | 24.6 | 38.7 | 80.8 | 80.1 |
| Comparative example 4 | 7.3 | 17.9 | 80.9 | 80.5 |

INDUSTRIAL AVAILIABILITY

According to the present invention, it is possible to provide artificial leather excellent in elasticity, particularly, in longitudinal elasticity which has not been achieved by a conventional artificial leather, without deterioration of surface appearance thereof, and a method of manufacturing the same.

With the artificial leather excellent in elasticity, it is possible to expand to kinds of clothing (such as tight type of clothes that requires elasticity) which was difficult to obtain in the past in terms of use of clothes, and to improve the formability upon processing to sofa or car seat or the like in terms of use of materials.

**Claims**

1. A method of manufacturing artificial leather excellent in elasticity, comprising the steps of: integrating a fiber web and a shrinkable sheet before or after applying elastomer to the fiber web; subjecting the resulting sheet to a shrinking treatment such that the shrinkage in longitudinal direction is 10% or more, and then removing the shrinkable sheet.

2. A method of manufacturing artificial leather excellent in elasticity according to claim 1, wherein a polymer for forming fibers of the fiber web is selected from nylon 6, nylon 66, nylon 12, co-polymerised nylon, polyethylene terephthalate, polybutylene terephthalate, polypropylene terephthalate and copolymers of these polyesters.

3. The method of manufacturing artificial leather excellent in elasticity according to claim 1, wherein the shrinking treatment is performed such that the shrinkage in longitudinal direction 15% or more.

4. The method of manufacturing artificial leather excellent in elasticity according to claim 1, wherein the integrating step is performed after applying the elastomer.

5. The method of manufacturing artificial leather excellent in elasticity according to claim 1, wherein the integrating step is performed before applying the elastomer.

6. The method of manufacturing artificial leather excellent in elasticity according to claim 1, wherein the fiber web is made mainly of ultrafine fiber having monofilament fineness of 0.9dtex or less or fiber capable of forming ultrafine fiber having monofilament fineness of 0.9dtex or less and, if necessary, the ultrafine fiber forming process is performed before or after applying the elastomer.

7. The method of manufacturing artificial leather excellent in elasticity according to claim 1, wherein the integrating step is performed by entanglement.

8. The method of manufacturing artificial leather excellent in elasticity according to claim 1, wherein a knitted or woven fabric composed of highly twisted yarn with the twist number of 700T/m or more is used as the shrinkable sheet.

9. The method of manufacturing artificial leather excellent in elasticity according to claim 1, wherein a knitted or woven fabric comprising highly shrinkable yarns having boiling shrinkage of 5% or more is used as the shrinkable sheet.

10. The method of manufacturing artificial leather excellent in elasticity according to claim 1, wherein the shrinking treatment is thermal treatment to be performed in heated liquid while rubbing the sheet.

11. The method of manufacturing artificial leather excellent in elasticity according to claim 1, wherein the shrinkable sheet is removed by buffing.

12. The method of manufacturing artificial leather excellent in elasticity according to claim 1, wherein the integrating step is performed by adhesion.

13. The method of manufacturing artificial leather excellent in elasticity according to claim 1, wherein the shrinkable sheet is a shrinkable film and the shrinking treatment is performed by heating.

14. The method of manufacturing artificial leather excellent in elasticity according to claim 1, wherein the shrinkable sheet is a knitted or woven fabric composed of polyester-based highly shrinkable yarn having boiling shrinkage of 5% or more.

15. The method of manufacturing artificial leather excellent in elasticity according to claim 1, wherein the shrinkable sheet is a knitted or woven fabric composed of polyamide yarn and the shrinking treatment is performed by using emulsion of alcohol or phenylethyl alcohol.

16. The method of manufacturing artificial leather excellent in elasticity according to claim 1, wherein the shrinking treatment is carried out by combination of dipping process and heating process in emulsion of benzyl alcohol or phenylethyl alcohol.

17. An artificial leather for which longitudinal elongation as defined herein is 15% or more, lateral elongation as defined herein is 15% or more, and longitudinal elastic recovery ratio as defined herein is 80% or more, wherein the artificial leather is composed of a fiber entangled web composed mainly of ultrafine fiber and elastomer applied to the fiber entangled web, wherein the polymer for forming the fiber is selected from nylon 6, nylon 66, nylon 12, co-polymerised nylon, polyethylene terephthalate, polybutylene terephthalate, polypropylene terephthalate and copolymers thereof, the fiber having a buckling structure formed after application of elastomer to the fiber entangled web and following a shrinking treatment in the longitudinal and lateral directions such that the shrinkage in the longitudinal direction is 10% or more.

18. The artificial leather according to claim 17, wherein the fiber entangled structure comprises mainly ultrafine fiber with its fineness of 0.9dtex or less.

19. The artificial leather according to claim 17, wherein lateral elastic recovery ratio is 80% or more.

20. The leather according to claim 17, wherein a polymer layer is formed on at least one surface of the artificial leather.


**Patentansprüche**

1. Verfahren zur Herstellung von künstlichem Leder mit hervorragender Elastizität, das die folgenden Schritte umfasst: das Integrieren eines Fasernetzes und einer schrumpfbaren Schicht vor oder nach dem Aufbringen von Elastomer auf das Fasernetz; das Durchführen einer Schrumpfungsbehandlung an der resultierenden Schicht, sodass sich die Schrumpfung in Längsrichtung auf 10 % oder mehr beläuft, und das anschließende Entfernen der schrumpfbaren Schicht.

2. Verfahren zur Herstellung von künstlichem Leder mit hervorragender Elastizität nach Anspruch 1, worin ein Polymer zur Bildung von Fasern des Fasernetzes aus Nylon 6, Nylon 66, Nylon 12, copolymerisiertem Nylon, Polyethylenterephthalat, Polybutylenterephthalat, Polypropylenterephthalat und Copolymeren dieser Polyester ausgewählt ist.

3. Verfahren zur Herstellung von künstlichem Leder mit hervorragender Elastizität nach Anspruch 1, worin die Schrumpfungsbehandlung so durchgeführt wird, dass sich die Schrumpfung in Längsrichtung auf 15 % oder mehr beläuft.

4. Verfahren zur Herstellung von künstlichem Leder mit hervorragender Elastizität nach Anspruch 1, worin der Schritt des Integrierens nach dem Aufbringen des Elastomers erfolgt.

5. Verfahren zur Herstellung von künstlichem Leder mit hervorragender Elastizität nach Anspruch 1, worin der Schritt des Integrierens vor dem Aufbringen des Elastomers erfolgt.

6. Verfahren zur Herstellung von künstlichem Leder mit hervorragender Elastizität nach Anspruch 1, worin das Fasernetz hauptsächlich aus ultrafeinen Fasern mit einer Monofilamentfeinheit von 0,9 dtex oder weniger oder Fasern hergestellt ist, die in der Lage sind, ultrafeine Fasern mit einer Monofilamentfeinheit von 0,9 dtex oder weniger zu bilden, und nötigenfalls das Verfahren zur Bildung der ultrafeinen Fasern vor oder nach dem Aufbringen des Elastomers durchgeführt wird.

7. Verfahren zur Herstellung von künstlichem Leder mit hervorragender Elastizität nach Anspruch 1, worin der Schritt des Integrierens mittels Verschlingung erfolgt.

8. Verfahren zur Herstellung von künstlichem Leder mit hervorragender Elastizität nach Anspruch 1, worin ein Gestrick oder Gewebe aus stark verzwirntem Garn mit einer Verzwirnungszahl von 700 T/m oder mehr als die schrumpfbare Schicht eingesetzt wird.

9. Verfahren zur Herstellung von künstlichem Leder mit hervorragender Elastizität nach Anspruch 1, worin ein Gestrick oder Gewebe, das stark schrumpfbare Garne mit einer Schrumpfung beim Kochen von 5 % oder mehr umfasst, als die schrumpfbare Schicht eingesetzt wird.

10. Verfahren zur Herstellung von künstlichem Leder mit hervorragender Elastizität nach Anspruch 1, worin die Schrumpfungsbehandlung eine Wärmebehandlung ist, die in heißer Flüssigkeit unter Reiben der Schicht durchzuführen ist.

11. Verfahren zur Herstellung von künstlichem Leder mit hervorragender Elastizität nach Anspruch 1, worin die schrumpfbare Schicht durch Polieren entfernt wird.

12. Verfahren zur Herstellung von künstlichem Leder mit hervorragender Elastizität nach Anspruch 1, worin der Schritt des Integrierens mittels Adhäsion durchgeführt wird.

13. Verfahren zur Herstellung von künstlichem Leder mit hervorragender Elastizität nach Anspruch 1, worin die schrumpfbare Schicht ein schrumpfbarer Film ist und die Schrumpfungsbehandlung durch Erwärmen erfolgt.

14. Verfahren zur Herstellung von künstlichem Leder mit hervorragender Elastizität nach Anspruch 1, worin die schrumpfbare Schicht ein Gestrick oder Gewebe ist, das aus stark schrumpfbarem Garn auf Polyesterbasis mit einer Schrumpfung beim Kochen von 5 % oder mehr besteht.

15. Verfahren zur Herstellung von künstlichem Leder mit hervorragender Elastizität nach Anspruch 1, worin die schrumpfbare Schicht ein aus Polyamidgarn bestehendes Gestrick oder Gewebe ist und die Schrumpfungsbehandlung unter Einsatz einer Emulsion von Alkohol oder Phenylethylalkohol erfolgt.

16. Verfahren zur Herstellung von künstlichem Leder mit hervorragender Elastizität nach Anspruch 1, worin die Schrumpfungsbehandlung durch Kombination eines Tauchverfahrens und eines Erwärmungsverfahrens in einer Emulsion von Benzylalkohol oder Phenylethylalkohol erfolgt.

17. Künstliches Leder, für das die Längsausdehnung wie hierin definiert 15 % oder mehr beträgt, die Breitenausdehnung wie hierin definiert 15 % oder mehr beträgt und das Längsrückfederungsverhältnis wie hierin definiert 80 % oder mehr beträgt, worin das künstliche Leder aus einem Netz aus verschlungenen Fasern besteht, das hauptsächlich aus ultrafeinen Fasern und auf das Netz aus verschlungenen Fasern aufgebrachtem Elastomer besteht, worin das Polymer zur Bildung der Fasern aus Nylon 6, Nylon 66, Nylon 12, copolymerisiertem Nylon, Polyethylenterephthalat, Polybutylenterephthalat, Polypropylenterephthalat und Copolymeren davon ausgewählt ist, wobei die Fasern nach dem Aufbringen von Elastomer auf das Netz aus verschlungenen Fasern und nach einer Schrumpfungsbehandlung in Längs- und in Breitenrichtung, sodass sich die Schrumpfung in Längsrichtung auf 10 % oder mehr beläuft, eine geknickte Struktur aufweisen.

**18.** Künstliches Leder nach Anspruch 17, worin die Struktur aus verschlungenen Fasern hauptsächlich ultrafeine Fasern mit einer Feinheit von 0,9 dtex oder weniger umfasst.

**19.** Künstliches Leder nach Anspruch 17, worin das Breitenrückfederungsverhältnis 80 % oder mehr beträgt.

**20.** Leder nach Anspruch 17, worin an zumindest einer Oberfläche des künstlichen Leders eine Polymerschicht ausgebildet ist.

**Revendications**

**1.** Procédé pour fabriquer un cuir artificiel ayant une excellente élasticité, comprenant les étapes consistant à : intégrer une toile de fibres et une feuille rétractable avant ou après application d'un élastomère sur la toile de fibres ; soumettre la feuille résultante à un traitement de rétrécissement de façon que le retrait dans la direction longitudinale soit de 10 % ou plus, et ensuite retirer la feuille rétractable.

**2.** Procédé pour fabriquer un cuir artificiel ayant une excellente élasticité selon la revendication 1, dans lequel un polymère pour former les fibres de la toile de fibres est choisi parmi le nylon 6, le nylon 66, le nylon 12, le nylon copolymérisé, le poly(téréphtalate d'éthylène), le poly(téréphtalate de butylène), le poly(téréphtalate de propylène) et les copolymères de ces polyesters.

**3.** Procédé pour fabriquer un cuir artificiel ayant une excellente élasticité selon la revendication 1, dans lequel le traitement de rétrécissement est effectué de façon que le retrait dans la direction longitudinale soit de 15 % ou plus.

**4.** Procédé pour fabriquer un cuir artificiel ayant une excellente élasticité selon la revendication 1, dans lequel l'étape d'intégration est effectuée après application de l'élastomère.

**5.** Procédé pour fabriquer un cuir artificiel ayant une excellente élasticité selon la revendication 1, dans lequel l'étape d'intégration est effectuée avant application de l'élastomère.

**6.** Procédé pour fabriquer un cuir artificiel ayant une excellente élasticité selon la revendication 1, dans lequel la toile de fibres est faite principalement de fibres ultrafines ayant une finesse de monofilament de 0,9 dtex ou moins ou de fibres capables de former des fibres ultrafines ayant une finesse de monofilament de 0,9 dtex ou moins et, si nécessaire, le procédé de formation de fibres ultrafines est effectué avant ou après application de l'élastomère.

**7.** Procédé pour fabriquer un cuir artificiel ayant une excellente élasticité selon la revendication 1, dans lequel l'étape d'intégration est effectuée par enchevêtrement.

**8.** Procédé pour fabriquer un cuir artificiel ayant une excellente élasticité selon la revendication 1, dans lequel une étoffe tricotée ou tissée composée de fils fortement torsadés ayant un nombre de torsades de 700 T/m ou plus est utilisée en tant que feuille rétractable.

**9.** Procédé pour fabriquer un cuir artificiel ayant une excellente élasticité selon la revendication 1, dans lequel une étoffe tricotée ou tissée comprenant des fils fortement rétractables ayant un retrait à l'ébullition de 5 % ou plus est utilisée en tant que feuille rétractable.

**10.** Procédé pour fabriquer un cuir artificiel ayant une excellente élasticité selon la revendication 1, dans lequel le traitement de rétrécissement est un traitement thermique devant être effectué dans un liquide chauffé cependant que la feuille est frottée.

**11.** Procédé pour fabriquer un cuir artificiel ayant une excellente élasticité selon la revendication 1, dans lequel la feuille rétractable est retirée par ponçage.

**12.** Procédé pour fabriquer un cuir artificiel ayant une excellente élasticité selon la revendication 1, dans lequel l'étape d'intégration est effectuée par adhésion.

**13.** Procédé pour fabriquer un cuir artificiel ayant une excellente élasticité selon la revendication 1, dans lequel la feuille rétractable est un film rétractable et le traitement de rétrécissement est effectué par chauffage.

**14.** Procédé pour fabriquer un cuir artificiel ayant une excellente élasticité selon la revendication 1, dans lequel la feuille rétractable est une étoffe tricotée ou tissée composée de fils fortement rétractables à base de polyester ayant un retrait à l'ébullition de 5 % ou plus.

**15.** Procédé pour fabriquer un cuir artificiel ayant une excellente élasticité selon la revendication 1, dans lequel la feuille rétractable est une étoffe tricotée ou tissée composée de fils de polyamide et le traitement de rétrécissement est effectué par utilisation d'une émulsion d'alcool ou d'alcool phényléthylique.

**16.** Procédé pour fabriquer un cuir artificiel ayant une excellente élasticité selon la revendication 1, dans lequel le traitement de rétrécissement est effectué par combinaison d'un procédé d'immersion et d'un procédé de chauffage dans une émulsion d'alcool benzylique ou d'alcool phényléthylique.

**17.** Cuir artificiel dont l'allongement longitudinal, tel que défini ici, est de 15 % ou plus, l'allongement latéral, tel que défini ici, est de 15 % ou plus, et le rapport de recouvrance élastique longitudinale, tel que défini ici, est de 80 % ou plus, lequel cuir artificiel est composé d'une toile enchevêtrée de fibres composée principalement de fibres ultrafines et d'élastomère appliqué sur la toile enchevêtrée de fibres, dans lequel le polymère pour former les fibres est choisi parmi le nylon 6, le nylon 66, le nylon 12, le nylon copolymérisé, le poly(téréphtalate d'éthylène), le poly (téréphtalate de butylène), le poly(téréphtalate de propylène) et leurs copolymères, la fibre ayant une structure de gaufrage formée après application d'élastomère à la toile enchevêtrée de fibres et après un traitement de rétrécissement dans les directions longitudinale et latérale de façon que le retrait dans la direction longitudinale soit de 10 % ou plus.

**18.** Cuir artificiel selon la revendication 17, dans lequel la structure enchevêtrée de fibres comprend principalement des fibres ultrafines ayant une finesse de 0,9 dtex ou moins.

**19.** Cuir artificiel selon la revendication 17, dans lequel le rapport de recouvrance élastique latérale est de 80 % ou plus.

**20.** Cuir artificiel selon la revendication 17, dans lequel une couche de polymère est formée sur au moins une surface du cuir artificiel.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI639747 B
- JP 2000303365 A
- JP 61132684 A
- JP 2001164477 A
- JP 62289602 A
- JP 62289603 A
- US 4515854 A